# EUROPEAN PATENT APPLICATION

(11) **EP 3 902 102 A1**
(43) Date of publication of application: **27.10.2021**
(21) Application number: 20465521.1
(22) Date of filing: 21.04.2020
(51) Int. Cl.: H02K 1/02, H01F 7/02, H02K 1/27, H01F 41/02, H02K 1/28

(54) **MANUFACTURING METHOD OF A SOFTPAD COMPRISING PERMANENT MAGNETS**

(71) Applicant: Vitesco Technologies GmbH, 30165 Hannover (DE)
(72) Inventor: Murgoci, Dragos, 81737 München (DE)

(57) **Abstract**

Manufacturing method of an elastic magnetic soft-pad (110) including: - step 302 of providing a top (402) and a bottom (404) shell, forming a mould comprising a cavern, wherein the top shell (402) comprises first shafts (202) protruding towards the bottom shell, the bottom shell (404) comprises second shafts (204) protruding towards of the top shell and the distal surfaces of the first shafts and the second shafts face each other; - step 304 of composing the top and the bottom shell such that they form a mould with a cavern; - step 306 of adding filling material into the mould and of hardening the filling material; - step 308 of extracting a semi-finished element with holes (802, 804) caused by first and second shafts (202, 204); - step 310 of inserting one permanent magnet (120) into each holes, filling the holes with filling material and hardening it.

## Description

The invention relates to a method for manufacturing an elastic magnetic softpad, an elastic softpad, the use of an elastic softpad, and an electrical machine comprising such an elastic magnetic softpad.

Special rotor constructions for electric machines may comprise elastic softpads comprising magnetic material. Such electric machines may be operated as a motor or as a generator, in order to fulfil respective needs. The magnetic material are hosted in elastic softpads, which can be elastically deformed in a rotor in order to obtain a variable magnetic induction B, swept conductor length L, and B center of gravity radius R. These parameters contribute into above described formula for the torque M at the rotor shaft. Such a special rotor construction allows to keep the stator current in a safe region regarding Joule heat, thereby avoiding an overheating and damage/destruction of the electric machine. Furthermore, even the torque can be increased due to a respective increase of parameters B, L, and R. Such elastic softpads may be manufactured by integrating, for example, ferrite powder in an elastic softpad. Producing such softpads may be very laborious since the magnetic material has to be mixed with the elastic material, and the magnetization has to be performed in a separate step.

Thus, a method is desired to manufacture elastic softpads in an efficient and economic way.

The problem is solved by the subject-matter of the independent claims. Embodiments are provided by the dependent claims, the following description and the accompanying figures.

The described embodiments similarly pertain to the method for manufacturing an elastic magnetic softpad, an elastic softpad, and the use of an elastic softpad. Synergetic effects may arise from different combinations of the embodiments although they might not be described in detail.

Further on, it shall be noted that all embodiments of the present invention concerning a method, might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

Technical terms are used by their common sense. If a specific meaning is conveyed to certain terms, definitions of terms will be given in the following in the context of which the terms are used.

According to an aspect, a method for manufacturing an elastic magnetic softpad is provided, comprising the following steps. Note, that the order of the steps may be changed.
In a first step, a top shell and a bottom shell forming a mold to be filled with an elastic material is provided, comprising a complementary structure for receiving magnets. That is, the mold comprises two half-shells, which may be manufactured and prepared separately. The half-shells my, e.g., be manufactured using an injection molding or 3-D printing technique.

The shells have the following properties, when the top and the bottom shells are composed or put together, i.e., placed on top of each other together: The complementary structure forms a cavern, the top shell comprises first shafts protruding to the bottom shell, the first shafts providing first holes in the non-complementary structure, the bottom shell comprises second shafts protruding to the top shell, the second shafts providing second holes in the non-complementary structure, and the distal surfaces of the first shafts and the second shafts essentially face each other.

"Complementary" means, that an inverse structure or form will be obtained when filling the half-shells or the mold with a filling material.

The term "discrete magnets" in this disclosure is based upon discrete elements in electronics in order to distinct between loose material as ferrite powder and elements having a tangible and definite form.

The holes, especially the first holes and/or the second holes, might be provided as blind holes in the non-complementary structure. That means, the holes have only one opening for receiving the discrete magnets.

In a further step, the top and the bottom shell are composed or put together such that they form a form-fit cavern. The cavern has a structure inside as described above. By the form-fitting, the filling material is kept inside the cavern.

In a next step the cavern is filled with an elastic material. This elastic material is also designated as "filling material" in this disclosure. Note, that the half-shells might be filled before the composition of the filling material or after the composition. Measures may be taken to keep inside the half-shells or to inject the filling material into the closed cavern.

In a further step, a softpad is extracted comprising the elastic material of the filled cavern. The softpad comprises the structure as described above.

In a next step, a discrete magnet into each of the holes and the holes with the magnets inside are filled with the elastic material. Note, that the order of inserting the magnets and filling the holes may vary. For example, this sub-step may be performed one by one, or, for example, first magnets may be inserted in all holes on the top side, then the holes are filled, and thereafter, the same procedure is applied to the bottom holes. Furthermore, in a single hole, more than one magnet may be inserted, preferably with a layer of filling material in-between two magnets.

That is, instead of using ferrite powder, "discrete" magnets are used, which reside in, for example, a matrix-like way in the elastic softpad. The position of the magnets changes if a pressure is exerted on the softpad. For example, when exerting a pressure on a bottom side of the softpad, experiencing a counter pressure at the top side, the distance of the magnets is reduced in top-bottom direction, and increased in the direction to the left and right, and therefore changing parameters B, L, width, and R in an electrical machine application, where the elastic softpads are arranged into the rotor space, e.g., in-between an axial multi-profile cam and the envelopment of the rotor. The axial cam may have a in parts a conical shape and serve to deform the softpad. The electrical machine may be operated as a generator or a motor.

According to an embodiment, the elastic material is silicone. Silicone has ideal properties as it is easy to handle, is elastic, durable, and has a highly availability at low costs. Polymers with similar properties may be used. Furthermore, the elastic softpads may comprise graphite for conducting the magnetic field inside the pad.

According to an embodiment, the silicone material is of a silicone type polymerizing in no-air conditions. This means, the type of silicone may to chosen such that the silicone is well hardening in the cavern formed by the two half-shells.

According to an embodiment, the shafts comprise different lengths. The lengths of the shafts may be chosen according the application and depend, for example, on the dimensions of the electrical machine. Further, the length may be chosen according to the desired magneto-electrical effect.

According to an embodiment, the magnets are permanent neodium magnets. Neodium magnets are characterized by their strength magnets. Further, they are easily available at suitable dimensions, and are available at relatively low costs.

According to an embodiment, the magnets and the shafts, and therefore also the holes, have a cylindrical shape. Not necessarily but ideally, the diameters of the magnets and the shafts or holes are the same, such that the magnets fit exactly into the holes.

According to an embodiment the magnets are arranged such that the magnets of the top shell face the magnets of the bottom shell antipodal. That is, besides of the side effect while manufacturing the magnets on the top part and the bottom part of the softpad hold each other together, i.e., the magnets of the same column are magnetically coupled, and the desired variable magnetic field for the application is obtained.

According to an embodiment, before filling the shells with the elastic material, the shells are covered with talcum. The talcum may be used for separating the half-shells from the silicone.

According to an embodiment, after inserting the magnets, the free space any free space is filled with the elastic material. That is, if there are still unfilled areas, these areas are also filled with the filling material.

According to an embodiment, the outer shape of the elastic softpads fits in a space of the rotor of an electrical machine. As described above, an electrical machine may be the main application of the elastic softpads, and the shape or dimensions are adapted to the space available in the electrical machine.

According to an embodiment, the steps filling (the cavern with an elastic material, extracting a softpad comprising the cavern filled with elastic material, inserting a discrete magnet into each of the holes, and filling the holes with elastic material are performed repeatedly so that each of the first holes and/or each of the second holes comprise more than one layer of magnets; wherein a magnet of a layer in a hole is separated by the filling material from a neighbored magnet layer.

According to a further aspect, an elastic softpad is provided, which is manufactured as described above.

According to a further aspect, a use of such an elastic softpad in an electrical machine is provided.

According to a further aspect, an electrical engine comprising an elastic softpad as described above is provided. The electrical engine comprises a rotor, the rotor having at least one free space or compartment between its shaft and its envelope, in which such an elastic softpad may be placed.

These and other features, aspects and advantages of the present invention will become better understood with reference to the accompanying figure and the following description.
Fig. 1a shows an un-deformed magnetic, elastic softpad in an electrical machine, according to an embodiment,
Fig. 1b shows a deformation of the elastic softpad in an electrical machine in a first state, according to an embodiment,
Fig. 1c shows a deformation of the elastic softpad in an electrical machine in a further state, according to an embodiment,
Fig. 2 shows an illustration of the underlying principle of the method, according to an embodiment,
Fig. 3 shows a flow diagram of the method for manufacturing an elastic magnetic softpad, according to an embodiment,
Fig. 4 shows a diagram of a top shell 402 and a bottom shell 404, according to an embodiment,
Fig. 5 shows a diagram of a top shell 402 and a bottom shell 404 put together as one mold, according to an embodiment,
Fig. 6 shows a diagram with the softpad inside the mold according to an embodiment,
Fig. 7 shows a diagram of the elastic softpad after removing the top and the bottom shells, according to an embodiment,
Fig. 8 shows a diagram of the obtained elastic softpad according to an embodiment.

The figures are described in the following.

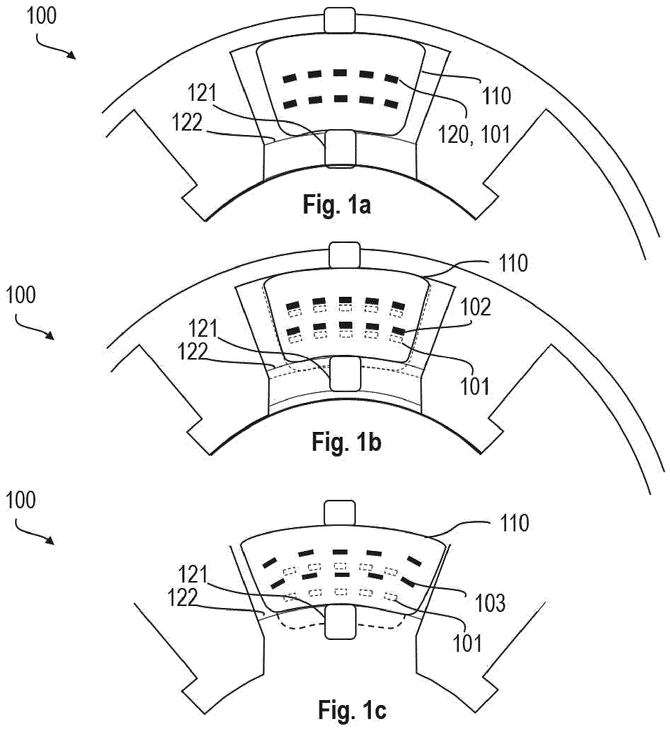

Figs. 1a to 1c show an electrical machine 100 with a rotor 120 and show how the softpads to be manufactured may be used in an electrical machine 100. The figures show different states of the deformation of the elastic softpads 110 placed in a free space of the rotor 112, wherein the movement of the magnets and the deformation of the softpad 110 is illustrated. In the example of Fig. 1a, the permanent magnets 120 are arranged in two layers in the elastic softpad 110. Each layer contains five permanent magnets 120. The permanent magnets 120 are located in their original positions 101 when the softpad 110 is in a not deformed state.

In Fig. 1b, the deformation means 121, 122 exert a pressure onto the elastic softpad 110 from the bottom side, such that the permanent magnets 120 are shifted radially from positions 101 to positions 102, thereby increasing the radius R. At the same time, the length of the elastic softpad 110 in tangential direction is increased, thereby increasing the conductor length L.

Fig. 1c shows the deformation in a further state, where more pressure is exerted to the elastic softpad 110 than illustrated in Fig. 1b, and where the permanent magnets are pushed to position 103.

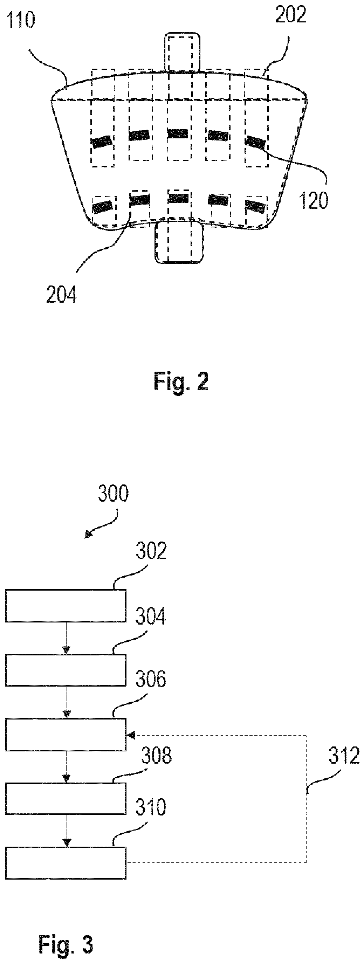

Fig. 2 shows an illustration of how the elastic softpad 110 with permanent magnets 120 may be produced according to an embodiment. The elastic softpad 110 may consist of an elastic base material with holes 202 from the top side and holes 204 from the bottom side. The holes 200, 202 will serve as magnet mounting pockets. The magnets 120, therefore, may be inserted into the holes and the holes may be filled with the same or a different material as the elastic softpad base material. In the following it is described, how the elastic softpad with holes 202 and 204 may be produced.

Fig. 3 shows a flow diagram of a method 300 for manufacturing an elastic magnetic softpad, according to an embodiment. The method comprises the steps: providing 302 a top (half-)shell and a bottom (half-)shell forming a mold to be filled with an elastic material. The shells comprise a complementary structure for receiving magnets. When the top and the bottom shells are composed together the shells show the following properties: The complementary structure forms a cavern. The top shell comprises first shafts protruding to the bottom shell. These first shafts will provide first holes in the non-complementary structure. The bottom shell comprises second shafts protruding to the top shell, where the second shafts provide second holes in the non-complementary structure. The distal surfaces of the first shafts and the second shafts essentially face each other. In a further step of the method, the top and the bottom shell are composed 304 such that they form a form-fit cavern. In a next step the cavern is filled 306 with an elastic material. In a further next step, a softpad comprising the cavern filled with elastic material is extracted 308. In a next step a discrete magnet into is inserted 310into each of the holes, and in a final step, the holes are filled with elastic material.

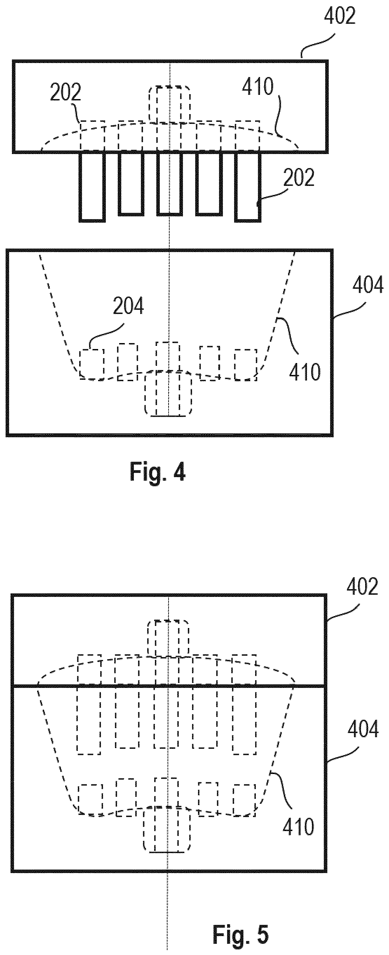

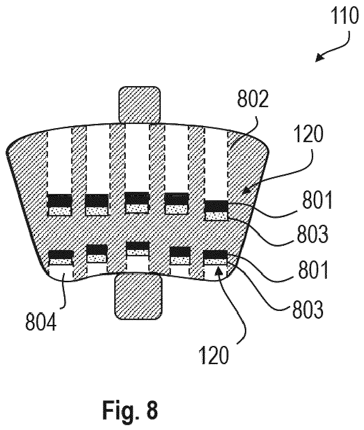

Fig. 4 shows a diagram of a top shell 402 and a bottom shell 404, which form a mold that will be filled with an elastic base material. Since it is a mold, the structure is complementary to that after filling the mold. That is, the protruding shafts 202, 204 at the top shell 402 and the bottom shell 404 will become the holes 802 and 804 as shown in Fig. 8, in which the permanent magnets 120 will be inserted in a later step. The dotted lines 410 in the top and the bottom shell 402, 404 indicate the later shape of the elastic softpad 110. In the complementary structure of the mold, the shape encloses a hollow volume, which is filled with the base material.

As can be seen in Fig. 5, after filling the half-shells 402, 404 with the elastic base material, the top shell 402 and the bottom shell 404 are composed together. The filling may be done, for example, by covering the filled top shell 402 with a sheet, turning the top shell and laying the top shell 402 onto the bottom shell 404, and removing the sheet, which then, i.e., before removing, is located in-between the top 402 and the bottom shell 404.

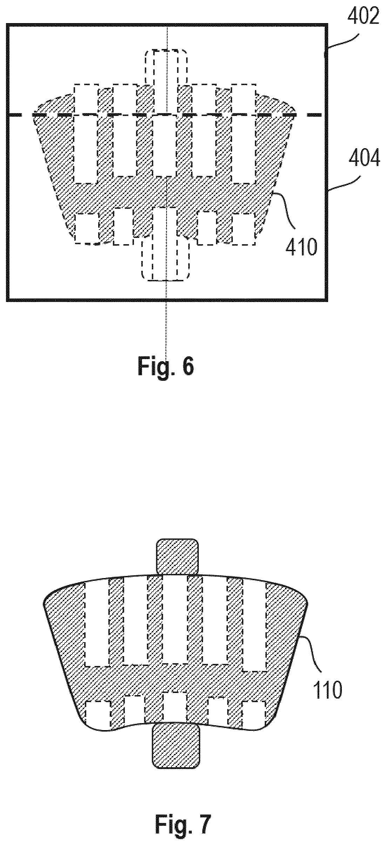

In Fig. 6, it can be seen that the shape 410 encloses a cavern, which is now filled with the base material, as for example, silicone. The base material has now to harden so that an elastic softpad 110 is obtained.

Fig. 7 shows a diagram of the obtained elastic softpad 110, after removing the top 402 and the bottom 404 shells.

Fig. 8 shows a diagram of the obtained elastic softpad 110, where the permanent magnets 120 have been inserted into the holes 802, 804 in such a way that the magnets 120 in respectively a top hole 802 and a bottom hole 804 attract each other, which is indicated by the solid black rectangles representing, for example the north pole 801 and the rectangles filled with a dotted structure representing, for example, the south pole 803 of a magnet 120. The magnets 120 may be arranged in the opposite direction.

As soon as the magnets 120 are inserted into the elastic softpads 110 the free space of the holes above or below, respectively, the permanent magnets 120 are filled up with the base material.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

## Claims

1. Method (300) for manufacturing an elastic magnetic softpad (110), comprising the steps:
providing (302) a top shell (402) and a bottom shell (404) forming a mold to be filled with an elastic material, comprising a complementary structure for receiving magnets (120); wherein, when the top (402) and the bottom (404) shells are composed together:
the complementary structure forms a cavern,
the top shell (402) comprises first shafts (202) protruding to the bottom shell (404), the first shafts (202) providing first holes (804) in the non-complementary structure;
the bottom shell comprises second shafts (204) protruding to the top shell (402), the second shafts (204) providing second holes (804) in the non-complementary structure; and
the distal surfaces of the first shafts (202) and the second shafts (204) essentially face each other;
composing (304) the top (402) and the bottom (404) shell such that they form a form-fit cavern;
filling (306) the cavern with an elastic material;
extracting (308) a softpad (110) comprising the cavern filled with elastic material;
inserting (310) a discrete magnet (120) into each of the holes (802, 804) and
filling the holes (802, 804) with elastic material.

2. Method (300) according to claim 1, wherein the elastic material is silicone.

3. Method (300) according to claim 2, wherein the silicone material is of a silicone type polymerizing in no-air conditions.

4. Method (300) according to claim 1, wherein the shafts (202, 204) comprise different lengths.

5. Method (300) according to any of the preceding claims, wherein the magnets (120) are permanent neodium magnets.

6. Method (300) according to any of the preceding claims, wherein the magnets (120) and the shafts (202, 204) have a cylindrical shape.

7. Method (300) according to any of the preceding claims, wherein the magnets (120) are arranged such that the magnets (120) of the top shell (402) face the magnets of the bottom shell (404) antipodal.

8. Method (300) according to any of the preceding claims, wherein, before filling the shells with the elastic material, the top shell (402) and the bottom shell (404) are covered with talcum.

9. Method (300) according to any of the preceding claims, wherein, after inserting the magnets (120), any free space is filled with the elastic material.

10. Method (300) according to any of the preceding claims, wherein an outer shape of the elastic softpad (110) fits in a space of a rotor (112) of an electrical machine (100).

11. Method (300) according to any of the preceding claims, wherein the steps filling (304) the cavern with an elastic material, extracting (306) a softpad comprising the cavern filled with elastic material, inserting (308) a discrete magnet (120) into each of the holes (802, 804), and filling the holes (802, 804) with elastic material are performed repeatedly so that each of the first holes (802) and/or each of the second holes (804) comprise more than one layer of magnets (120); wherein a magnet (120) of a layer in a hole (802, 804) is separated by the elastic material from a neighbored magnet layer.

12. An elastic softpad (110), which is manufactured according to any of claims 1 to 11.

13. Use of an elastic softpad (110) according to claim 12 in an electrical machine (100).

14. An electrical engine (100) comprising an elastic softpad (110) according to claim 12.
